# EUROPÄISCHE PATENTSCHRIFT

(11) **EP 1 205 013 B1**
(45) Veröffentlichungstag und Bekanntmachung des Hinweises auf die Patenterteilung: **11.12.2002**
(21) Anmeldenummer: 00960486.9
(22) Anmeldetag: 18.08.2000
(51) Int. Cl.: H01S 3/042, H01S 3/06

(54) **FESTKÖRPERLASERKÜHLUNG**
SOLID-STATE LASER COOLING
REFROIDISSEMENT DE LASER A CORPS SOLIDE

(30) Priorität: 21.08.1999 DE 19939774
(43) Veröffentlichungstag der Anmeldung: 15.05.2002
(73) Patentinhaber: Rofin-Sinar Laser GmbH, 22133 Hamburg (DE)
(72) Erfinder: LUDEWIGT, Klaus, D-22113 Oststeinbeck (DE)
(74) Vertreter: Mörtel & Höfner
(86) Internationale Anmeldenummer: EP0008079
(87) Internationale Veröffentlichungsnummer: WO01015290

(56) Entgegenhaltungen:
- WO-A-98/10497
- DE-A- 1 942 002
- DE-A- 4 239 653
- US-A- 5 553 088
- WEBER R ET AL: "COOLING SCHEMES FOR LONGITUDINALLY DIODE LASER-PUMPED ND:YAG RODS" IEEE JOURNAL OF QUANTUM ELECTRONICS,US,IEEE INC. NEW YORK, Bd. 34, Nr. 6, 1. Juni 1998 (1998-06-01), Seiten 1046-1053, XP000765507 ISSN: 0018-9197 in der Anmeldung erwähnt
- PATENT ABSTRACTS OF JAPAN vol. 017, no. 125 (E-1332), 16. März 1993 (1993-03-16) -& JP 04 302186 A (HITACHI LTD), 26. Oktober 1992 (1992-10-26)

## Beschreibung

Die Erfindung bezieht sich auf einen Festkörperlaser mit einer Kristallscheibe als aktives Medium, die zur Kühlung mit einer in einer Kühlkammer befindlichen Kühlflüssigkeit in direktem thermischen Kontakt steht.

Ein solcher Festkörperlaser ist beispielsweise aus der US-Patentschrift 5,553,088 A bekannt. Laseraktives Basiselement eines solchen Festkörperlasers, der in der Literatur auch als Scheibenlaser bezeichnet wird, ist eine dünne, nur wenige Zehntelmillimeter bis wenige Millimeter dicke und typisch einen Durchmesser im Größenordnungsbereich von etwa 10 mm aufweisende Kristallscheibe, die auf einem massiven aus Kupfer bestehenden Kühlkörper angeordnet und auf ihrer dem Kühlkörper zugewandten Oberfläche mit einer reflektierenden Schicht versehen ist. Zur Verbindung der Kristallscheibe mit den Kühlkörper wird eine weiche Zwischenschicht, beispielsweise Indium In, eingesetzt, die die thermischen Verformungen des Kristalls im Laserbetrieb aufnehmen kann. Die in der Kristallscheibe entstehende Wärme fließt über die duktile Zwischenschicht in den massiven Kühlkörper. Dieser wird von einer Kühlflüssigkeit, in der Regel Wasser, durchströmt, wodurch die Wärme abtransportiert wird.

Der bekannte Aufbau weist jedoch eine Reihe von Nachteilen auf. Durch die Verwendung einer duktilen Zwischenschicht zwischen dem Kühlkörper und der Kristallscheibe wird der Wärmeübergangswiderstand auch bei idealem großflächigen Kontakt erhöht. Der Wärmeübergangswiderstand hängt außerdem empfindlich von der Qualität des Kontaktes zwischen der Kristallscheibe und dem Kühlkörper ab, so daß ein hoher fertigungstechnischer Aufwand betrieben werden muß, um eine ausreichende Reproduzierbarkeit des thermischen Kontaktes zu erzielen. Darüber hinaus läßt sich im Betrieb bei zu starken, thermisch verursachten Verformungen der Kristallscheibe nicht vermeiden, daß der Kühlkontakt teilweise abreißen kann, so daß in diesen Zonen eine deutliche Verschlechterung der Wärmeabfuhr auftritt.

Die vorgenannten Nachteile könnten nun dadurch vermieden werden, wenn zwischen der Kühlflüssigkeit und der Kristallscheibe ein direkter thermischer Kontakt bestehen würde, wie er beispielsweise bei der aus der DE 197 34 484 A1 bekannten Kühlanordnung für eine Laserdiode bekannt ist. Bei dieser bekannten Kühlanordnung ist eine Laserdiode auf einem Kühlkörper angeordnet, der mit einem Kühlkanal für eine Kühlflüssigkeit versehen ist. Die Laserdiode ist über einer Öffnung des Kühlkanals angebracht, so daß sie in direktem thermischen Kontakt mit der Kühlflüssigkeit steht. Auf diese Weise ist auch bei eventuellen thermischen Verformungen ein gute Kühlung sichergestellt.

Ebenso ist es aus IEEE Journal of Quantum Electronics, Vol. 34, No. 6, 1998, S. 1046-1053 bekannt, die Laserstäbe eines Festkörperlasers durch unmittelbaren Kontakt mit Kühlwasser zu kühlen.

Eine derartige direkte Kühlung ist jedoch mit der zerbrechlichen dünnen Kristallscheibe eines Scheibenlasers nicht ohne weiteres möglich.

Der Erfindung liegt nun die Aufgabe zugrunde, einen Festkörperlaser mit einer Kristallscheibe als aktives Medium anzugeben, bei dem die Kühlung gegenüber bekannten Scheibenlasern verbessert ist.

Die genannte Aufgabe wird gemäß der Erfindung gelöst mit den Merkmalen des Patentanspruches 1. Da die Kristallscheibe gemäß der Erfindung ein Wandelement einer die Kühlflüssigkeit aufnehmenden Kühlkammer bildet und somit eine ihrer Flachseiten unmittelbar in thermischem Kontakt mit der Kühlflüssigkeit steht, ist ein minimaler Wärmeübergangswiderstand gewährleistet, der auch durch die Verformung der Kristallscheibe nicht beeinflußt wird, da die Kühlflüssigkeit die Kristallscheibe stets unabhängig von deren Form berührt, so daß ein Kühlabriß nicht stattfinden kann. Außerdem ist eine hohe Reproduzierbarkeit des niedrigen Wärmeübergangswiderstandes fertigungstechnisch einfach realisierbar.

Die Kühlung durch unmittelbaren thermischen Kontakt mit der Kühlflüssigkeit ist möglich, da auf der der Kühlkammer abgewandten Seite der Kristallscheibe ein optisch transparenter Stützkörper angeordnet ist. Durch diese Maßnahme wird eine Verformung der Kristallscheibe vermieden, die durch eine Druckdifferenz verursacht wird, die zwischen der Kühlkammer und dem Außenraum aufgrund des Drucks der Kühlflüssigkeit entsteht. Ebenso werden Schwingungen der Kristallscheibe unterdrückt und insbesondere bei direkt auf die Kristallscheibe zuströmender Kühlflüssigkeit deren Zerbrechen bei zu hohem Flüssigkeitsdruck vermieden. Die Verwendung eines Stützkörpers ist dabei insbesondere bei sehr geringer Dicke der Kristallscheiben, beispielsweise kleiner als 300 µm, von Vorteil, wie sie in Hochleistungslasern eingesetzt werden.

Vorzugsweise ist die Kristallscheibe an ihrer der Kühlkammer zugewandten, in unmittelbarem thermischen Kontakt mit der Kühlflüssigkeit stehenden Flachseite mit einer gegen mechanische und chemische Angriffe durch die Kühlflüssigkeit widerstandsfähigen Schutzschicht versehen. Dadurch ist eine hohe Betriebsdauer der Kristallscheibe gewährleistet.

Insbesondere besteht die die Oberfläche der Kristallscheibe bildende Schutzschicht aus Metall, insbesondere Gold (Au). Da eine beispielsweise aufgedampfte Goldschicht als abschließende Schicht auf der Reflexionsschicht der Kristallscheibe sehr gut haftet, ist sowohl eine hohe mechanische als auch eine hohe chemische Stabilität gegen die Kühlflüssigkeit gewährleistet.

Alternativ hierzu besteht die Schutzschicht aus einem dielektrischen Werkstoff, insbesondere Siliziumdioxid (SiO₂). Durch die Maßnahme wird die mechanische Stabilität weiter erhöht.

In einer vorteilhaften Ausführungsform ist der Stützkörper scheibenförmig und mit einer Flachseite kraftschlüssig mit der Kristallscheibe verbunden. Durch die flächige Verbindung wird eine besonders gleichmäßige Abstützung der Kristallscheibe erzielt.

In einer weiteren vorteilhaften Ausgestaltung der Erfindung ist die Kristallscheibe an den Stützkörper gepreßt. Eine solche mechanische Preßverbindung läßt sich fertigungstechnisch besonders einfach realisieren und ermöglicht auch eine Demontage von Kristallscheibe und Stützkörper.

In einer besonders bevorzugten Ausgestaltung der Erfindung ist der Stützkörper unlösbar mit der Kristallscheibe verbunden. Durch diese Maßnahme kann ein besonders guter Kontakt zwischen Stützkörper und Kristallscheibe sichergestellt werden.

Der Stützkörper besteht vorzugsweise aus undotiertem YAG oder aus Saphir, die vorzugsweise durch ein Diffusionsbondverfahren mit der Kristallscheibe verbunden sind, und auf diese Weise eine besonders stabile Verbindung zwischen Kristallscheibe und Stützkörper ermöglichen.

In einer weiteren vorteilhaften Ausgestaltung der Erfindung ist die der Kristallscheibe abgewandte Stirnfläche des Stützkörpers gekrümmt. Dadurch kann der Stützkörper zugleich zur Strahlformung verwendet werden.

Zur weiteren Erläuterung der Erfindung wird auf die Ausführungsbeispiele der Zeichnung verwiesen. Es zeigen:
- Fig. 1: einen Festkörperlaser mit einer direkt gekühlten Kristallscheibe gemäß der Erfindung in einem schematischen Querschnitt,
- Fig. 2: eine weitere vorteilhafte Ausführungsform eines erfindungsgemäßen Festkörperlasers ebenfalls in einem schematischen Querschnitt.

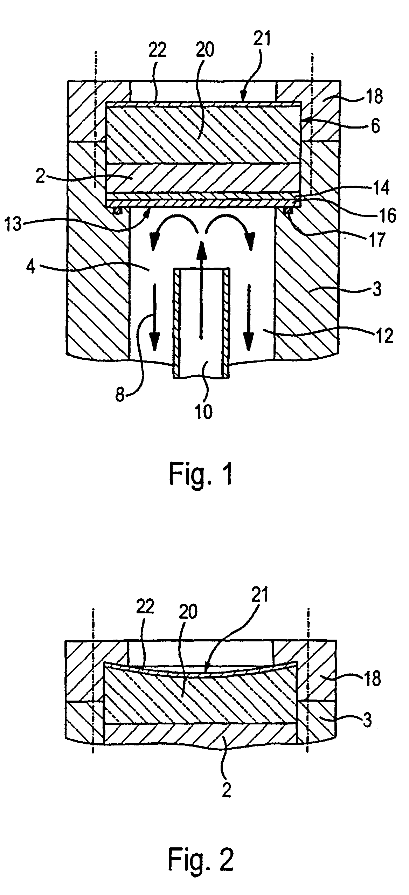

Gemäß Fig. 1 ist eine als laseraktives Medium verwendete Kristallscheibe 2 in die Wand 3 einer Kühlkammer 4 eingesetzt und bildet ein die Kühlkammer 4 begrenzendes Wandelement. In der im Ausführungsbeispiel hohlzylindrische Kühlkammer 4 befindet sich hierzu am Innenumfang eine Nut 6, in die die Kristallscheibe 2 eingesetzt ist.

In der Kühlkammer 4 befindet sich Kühlflüssigkeit 8, die im Beispiel von einem internen Kühlkanal 10 geführt ist und die Kristallscheibe 2 unmittelbar anströmt, von dieser umgelenkt und in einem Ringkanal 12 abgeführt wird.

Die Kristallscheibe 2 ist an ihrer der Kühlkammer 4 zugewandten Flachseite 13 mit einer hochreflektierenden, in der Regel mehrschichtigen Spiegelschicht 14 versehen, auf der eine Schutzschicht 16, beispielsweise Gold (Au) oder Siliziumdioxid (SiO₂), aufgebracht ist, wobei die optischen Eigenschaften der Schutzschicht 16 die reflektierenden Eigenschaften der Spiegelschicht 14 zusätzlich verbessern können. Mit anderen Worten: Die Schutzschicht 16 kann auch die die Oberfläche bildende letzte Schicht der mehrschichtigen Spiegelschicht 14 sein.

Die Schutzschicht 16 ist einerseits mechanisch hinreichend stabil, um nicht durch die anströmende Kühlflüssigkeit 8, in der Regel Wasser, abgelöst werden zu können. Andererseits schützt die Schutzschicht 16 die darunterliegende Spiegelschicht 14 vor einem chemischen Angriff durch die Kühlflüssigkeit 8.

Um eine ausreichende Dichtigkeit der Kühlkammer 4 nach außen zu erreichen, können zusätzlich Dichtmittel 17, beispielsweise ein elastischer Dichtring, vorgesehen sein, die zusätzlich zu einen Preßsitz der Kristallscheibe in den Nuten 6 führen. Hierzu ist im Beispiel ein Ringflansch 18 vorgesehen, der gegen die Stirnfläche der Wand 3 verspannt wird, wobei Stirnfläche und Wand jeweils Ausnehmungen aufweisen, die im zusammengefügten Zustand die Nut 6 bilden.

An ihrer der Kühlkammer 4 abgewandten Flachseite der Kristallscheibe 2 ist ein optisch transparenter Stützkörper 20 angeordnet, der an seiner von der Kühlkammer 4 abgewandten Stirnseite 21 mit einer antireflektierenden, hochtransparenten Schicht 22 versehen ist.

Im Ausführungsbeispiel wird die Kristallscheibe 2 longitudinal gepumpt, d. h. das Pumplicht wird auf der Flachseite der Kristallscheibe 2 eingekoppelt, aus der der Laserstrahl L austritt. Alternativ hierzu kann die Kristallscheibe 2 auch radial gepumpt werden. In diesem Fall sind im Bereich der Nut 6 radiale Durchgangsöffnungen vorgesehen, durch die das Pumplicht seitlich in die Kristallscheibe 2 eintreten kann.

Das Pumplicht kann auch seitlich und schräg in den Stützkörper 20 eingekoppelt und von dort durch innere Reflexion in die Kristallscheibe 2 gelenkt werden.

Der Stützkörper 20 ist ebenso wie die Kristallscheibe 2 scheibenförmig, so daß zwischen Kristallscheibe 2 und Stützkörper 20 eine flächige Verbindung entsteht. Diese kann durch eine Preßverbindung zwischen Kristallscheibe 2 und Stützkörper 20, beispielsweise durch Einspannen in die Nut 6 mit Hilfe des Ringflansches 18 herbeigeführt werden Vorzugsweise ist jedoch eine unlösbare Bondverbindung vorgesehen, wobei insbesondere eine Verbindung durch ein Diffusionsbondverfahren vorteilhaft ist. Beim Diffusionsbondverfahren werden die zu verbindenden Teile sehr gut poliert, aneinandergepreßt und dann auf eine Temperatur knapp unterhalb des Schmelzpunktes gebracht. Dann setzt ein Ionenaustausch durch die Grenzfläche ein (Diffusion), so daß eine feste Verbindung mit hoher optischer Qualität entsteht. Dieses Verfahren wird beispielsweise von der Firma ONYX OPTICS, 6551 Sierra Lane, Dublin, California 94568, durchgeführt.

Für die Herbeiführung einer ausreichenden mechanischen Stabilität reicht eine Dicke des Stützkörpers 20 im Millimeterbereich aus. Als Werkstoff ist insbesondere Saphir oder undotiertes YAG geeignet. Diese haben neben hervorragenden optischen Eigenschaften auch noch den Vorteil, daß sich ihre Ausdehnungskoeffizienten nur geringfügig vom Ausdehnungskoeffizienten der Kristallscheibe 2 unterscheiden.

Wird die Kristallscheibe 2 nur mechanisch an den Stützkörper 20 angepreßt, so kann zusätzlich zwischen Kristallscheibe 2 und Stützkörper 20 eine reflexionsmindernde Grenzschicht eingebracht werden. Diese entfällt, wenn Kristallscheibe 2 und Stützkörper 20 durch ein Diffusionsbondverfahren unmittelbar miteinander verbunden werden.

Alternativ zu der in Fig. 1 dargestellten Ausführungsform des Stützkörpers 20 mit planer Stirnfläche 21 ist gemäß Fig. 2 die Stirnfläche 21 konkav oder wie im Ausführungsbeispiel dargestellt konvex gekrümmt. In diesem Fall wirkt der Stützkörper 20 zugleich als abbildendes optisches Element und dient zugleich der geometrischen Formung (Strahlformung) des Laserstrahls. Eine solche Formgebung ist möglich, da der Stützkörper 20 eine Dicke aufweist, die ein formgebendes Schleifen der Oberfläche ermöglicht. Grundsätzlich ist das Anbringen eines solchen optischen Elementes auf der Kristallscheibe 2 auch in Scheibenlasern von Vorteil, bei denen die Kristallscheibe 2 herkömmlich gekühlt wird, d. h. nicht wie bei der vorliegenden Erfindung in unmittelbarem Kontakt mit der Kühlflüssigkeit steht.

### Bezugszeichenliste

- 2: Kristallscheibe
- 3: Wand
- 4: Kühlkammer
- 6: Nut
- 8: Kühlflüssigkeit
- 10: Kühlkanal
- 12: Ringkanal
- 13: Flachseite
- 14: Spiegelschicht
- 16: Schutzschicht
- 17: Dichtmittel
- 18: Ringflansch
- 20: Stützkörper
- 21: Stirnfläche
- 22: antireflektierende Schicht

## Patentansprüche

1. Festkörperlaser mit einer Kristallscheibe (2) als aktives Medium und einer eine Kühlflüssigkeit (8) aufnehmenden Kühlkammer (4), wobei die Kristallscheibe (2) ein Wandelement der Kühlkammer (4) bildet und mit ihrer der Kühlkammer (4) zugewandten Flachseite (13) in unmittelbarem thermischen Kontakt mit der Kühlflüssigkeit steht, und wobei an der der Kühlkammer (4) abgewandten Seite der Kristallscheibe (2) ein optisch transparenter Stützkörper (20) angeordnet ist.

2. Festkörperlaser nach Anspruch 1, bei dem die der Kühlkammer (4) zugewandte Flachseite (13) der Kristallscheibe (2) mit einer gegen mechanische und chemische Angriffe durch die Kühlflüssigkeit (8) widerstandsfähigen Schutzschicht (16) versehen ist.

3. Festkörperlaser nach Anspruch 1 oder 2, bei dem der Stützkörper (20) scheibenförmig ist und mit einer Flachseite kraftschlüssig mit der Kristallscheibe (2) verbunden ist.

4. Festkörperlaser nach Anspruch 3, bei dem die Kristallscheibe (2) an den Stützkörper (20) gepreßt ist.

5. Festkörperlaser nach Anspruch 3, bei dem der Stützkörper (20) unlösbar mit der Kristallscheibe (2) verbunden ist.

6. Festkörperlaser nach einem der Ansprüche 1 bis 5, bei dem der Stützkörper (20) aus undotiertem YAG besteht.

7. Festkörperlaser nach einem der Ansprüche 1 bis 5, bei dem der Stützkörper (20) aus Saphir besteht.

8. Festkörperlaser nach Anspruch 6 oder 7, bei dem der Stützkörper (20) mit der Kristallscheibe (2) durch ein Diffusionsbondverfahren verbunden ist.

9. Festkörperlaser nach einem der Ansprüche 1 bis 8, bei dem die Schutzschicht (16) aus Gold (Au) besteht.

10. Festkörperlaser nach einem der Ansprüche 1 bis 8, bei dem die Schutzschicht (16) aus Siliziumdioxid (SiO₂) besteht.

11. Festkörperlaser nach einem der vorhergehenden Ansprüche, bei dem die der der Kristallscheibe (2) abgewandte Stirnfläche (21) des Stützkörpers (20) gekrümmt ist.

## Claims

1. Solid-state laser having a crystal wafer (2) as active medium and a cooling chamber (4) which accommodates a cooling liquid (8), the crystal wafer (2) forming a wall element of the cooling chamber (4) and being in direct thermal contact, by means of its flat side (13) which faces the cooling chamber (4), with the cooling liquid, and an optically transparent support body (20) being arranged on that side of the crystal wafer (2) which is remote from the cooling chamber (4).

2. Solid-state laser according to Claim 1, in which the flat side (13) of the crystal wafer (2) which faces the cooling chamber (4) is provided with a protective layer (16) which is resistant to mechanical and chemical attacks from the cooling liquid (8).

3. Solid-state laser according to Claim 1 or 2, in which the support body (20) is in the form of a disc and, by means of a flat side, is connected in a non-positive manner to the crystal wafer (2).

4. Solid-state laser according to Claim 3, in which the crystal wafer (2) is pressed onto the support body (20).

5. Solid-state laser according to Claim 3, in which the support body (20) is unreleasably connected to the crystal wafer (2).

6. Solid-state laser according to one of Claims 1 to 5, in which the support body (20) consists of undoped YAG.

7. Solid-state laser according to one of Claims 1 to 5, in which the support body (20) consists of sapphire.

8. Solid-state laser according to Claim 6 or 7, in which the support body (20) is joined to the crystal wafer (2) by means of a diffusion bonding process.

9. Solid-state laser according to one of Claims 1 to 8, in which the protective layer (16) consists of gold (Au).

10. Solid-state laser according to one of Claims 1 to 8, in which the protective layer (16) consists of silicon dioxide (SiO₂).

11. Solid-state laser according to one of the preceding claims, in which that end face (21) of the support body (20) which is remote from the crystal wafer (2) is curved.

## Revendications

1. Laser à semi-conducteur comprenant une tranche (2) de cristal servant de milieu actif et une chambre (4) de refroidissement recevant du liquide (8) de refroidissement, la tranche (2) de cristal formant un élément de paroi de la chambre (4) de refroidissement et étant par sa face (13) plate tournée vers la chambre (4) de refroidissement en contact thermique direct avec le liquide de refroidissement et une pièce (20) d'appui transparente optiquement étant disposée sur la face de la tranche (2) de cristal qui est éloignée de la chambre (4) de refroidissement.

2. Laser à semi-conducteur suivant la revendication 1, dans lequel la face (13) plate de la tranche (2) de cristal qui est tournée vers la chambre (4) de refroidissement est munie d'une couche (16) de protection apte à résister aux attaques mécaniques et chimiques par le liquide (8) de refroidissement .

3. Laser à semi-conducteur suivant la revendication 1 ou 2, dans lequel la pièce (20) d'appui est en forme de disque et est reliée par une face plate à coopération de force avec la tranche (2) de cristal.

4. Laser à semi-conducteur suivant la revendication 3, dans lequel la tranche (2) de cristal est pressée sur la pièce (20) d'appui.

5. Laser à semi-conducteur suivant la revendication 3, dans lequel la pièce (20) d'appui est reliée de manière inamovible à la tranche (2) de cristal.

6. Laser à semi-conducteur suivant l'une des revendications 1 à 5, dans lequel la pièce (20) d'appui est en YAG non dopé.

7. Laser à semi-conducteur suivant l'une des revendications 1 à 5, dans lequel la pièce (20) d'appui est en saphir.

8. Laser à semi-conducteur suivant la revendication 6 ou 7, dans lequel la pièce (20) d'appui est reliée à la tranche (2) en cristal par un procédé de liaison par diffusion.

9. Laser à semi-conducteur suivant l'une des revendications 1 à 8, dans lequel la couche (16) de protection est en or (Au).

10. Laser à semi-conducteur suivant l'une des revendications 1 à 8, dans lequel la couche (16) de protection est en dioxyde de silicium (SiO₂).

11. Laser à semi-conducteur suivant l'une des revendications précédentes, dans lequel la face (21) frontale de la pièce (20) d'appui, qui est éloignée de la tranche (2) de cristal, est courbée.
